# FASCICULE DE BREVET EUROPEEN

(11) **EP 3 441 608 B1**
(45) Date de publication et mention de la délivrance du brevet: **01.05.2024**
(21) Numéro de dépôt: 18186223.6
(22) Date de dépôt: 30.07.2018
(51) Int. Cl.: F02N 11/04, F02N 11/00, F02N 11/08, B60W 30/18, G01F 23/00, G01M 3/00, F02N 11/10

(54) **PROCÉDÉ ET DISPOSITIF DE DÉMARRAGE D'UN MOTEUR THERMIQUE DANS UN VÉHICULE LORS UN PASSAGE À GUÉ**
VERFAHREN UND VORRICHTUNG ZUM ANLASSEN EINES WÄRMEKRAFTMOTORS EINES FAHRZEUGS IN EINER FURT
METHOD AND DEVICE FOR STARTING A HEAT ENGINE IN A FORDING VEHICLE

(30) Priorité: 09.08.2017 FR 1757606
(43) Date de publication de la demande: 13.02.2019
(73) Titulaire: NEW H POWERTRAIN HOLDING, S.L.U., 47008 Valladolid (ES)
(72) Inventeur: MILLON, JEAN-PIERRE, 78870 BAILLY (FR); DER MATHEOSSIAN, JEAN-YVES, 75005 PARIS (FR); TAQUE, OLIVIER, 78460 CHEVREUSE (FR)
(74) Mandataire: Renault Group

(56) Documents cités:
- EP-A2- 2 907 716
- WO-A1-2012/123554
- DE-A1-102008 042 016
- FR-A1- 2 962 770

## Description

L'invention concerne un procédé de fonctionnement d'un dispositif de démarrage d'un moteur thermique.

L'invention concerne également un dispositif de démarrage d'un moteur thermique.

L'invention concerne en outre un moteur thermique comprenant un alterno-démarreur, un démarreur et un dispositif de démarrage d'un moteur thermique.

L'invention concerne finalement un produit programme d'ordinateur et un support d'enregistrement de données.

Les nouvelles contraintes des pompes à carburant haute pression 3000 bars impliquent un déplacement du démarreur en partie basse du moteur. Ce dernier se retrouve alors dans des zones inondées en cas de passage de gué. On risque alors une immobilisation du véhicule si le conducteur tente un redémarrage de son véhicule lorsque le moteur de ce dernier a été arrêté alors que le véhicule s'est immobilisé au milieu d'un gué.

On connaît aussi des véhicules équipés d'un alterno-démarreur. Il est possible d'utiliser l'alterno-démarreur afin d'assister le moteur thermique durant la phase d'accélération ou afin de démarrer le moteur thermique du véhicule. Mais l'utilisation de l'alterno-démarreur pose des problèmes par grand froid (typiquement T° < -20°C) lorsque du givre s'est déposé sur la courroie d'entraînement des accessoires. Il fait alors glisser la courroie en phase de démarrage du moteur thermique. Ceci peut rendre impossible un démarrage par grand froid avec un alterno-démarreur. Cette difficulté est particulièrement importante avec un moteur à fort taux comme un moteur Diesel, car ce taux élevé nécessite un couple d'entraînement élevé pour démarrer le moteur. La demande EP 2 907 716 A2 en est un des nombreux exemples.

Le but de l'invention est de fournir un dispositif de démarrage d'un moteur thermique et un procédé de fonctionnement d'un dispositif de démarrage d'un moteur thermique remédiant aux inconvénients ci-dessus. L'invention propose en particulier un dispositif de démarrage selon la revendication 6 et un procédé de démarrage fiabilisant le démarrage selon la revendication 1.

Selon l'invention, un procédé régit le fonctionnement d'un dispositif de démarrage d'un moteur thermique comprenant un alterno-démarreur et un démarreur. Le procédé comprend une première et une deuxième étapes d'activation exclusives l'une de l'autre:
- la première étape d'activation comprenant une émission d'un signal d'activation, notamment un signal d'alimentation, de l'alterno-démarreur, et
- la deuxième étape d'activation comprenant une émission d'un signal d'activation, notamment un signal d'alimentation, du démarreur.

Le procédé comprend
- un premier mode de fonctionnement mis en oeuvre entre une mise sous tension du dispositif de démarrage et le premier démarrage du moteur faisant suite à cette mise sous tension, et
- un deuxième mode de fonctionnement le reste du temps.

Le premier mode de fonctionnement comprend, suite à une étape de demande de démarrage du moteur thermique, la première étape d'activation s'il est déterminé que :
- le démarreur est immergé ou il existe une fuite dans un système d'étanchéité du démarreur ; ou
- en cas de première tentative de démarrage du moteur dans ce premier mode, le démarreur n'est pas immergé et une température du moteur est supérieure à un premier seuil.

Le premier mode de fonctionnement comprend, suite à une étape de demande de démarrage du moteur thermique, la deuxième étape d'activation s'il est déterminé que :
- le démarreur n'est pas immergé ; ou
- en cas de première tentative de démarrage du moteur dans ce premier mode, le démarreur n'est pas immergé et une température du moteur est inférieure à un premier seuil.

Le deuxième mode de fonctionnement peut comprendre, suite à une étape de demande de démarrage du moteur thermique, la première étape d'activation.

Le deuxième mode de fonctionnement peut comprendre, suite à une tentative infructueuse de démarrage du moteur et jusqu'au prochain démarrage du moteur, une mise en oeuvre du premier mode de fonctionnement.

Selon l'invention, un dispositif de démarrage d'un moteur thermique comprend des éléments matériels et/ou logiciels mettant en oeuvre le procédé défini précédemment, notamment des éléments matériels et/ou logiciel conçus pour mettre en oeuvre le procédé défini précédemment.

Les moyens matériels comprennent :
- un détecteur de démarreur immergé, notamment mettant en oeuvre une étape de détection,
- un capteur de température, notamment mettant en oeuvre une étape de mesure, et
- un calculateur.

Selon l'invention, un système de moteur thermique comprend un alterno-démarreur, un démarreur, un dispositif défini précédemment et un moteur thermique.

Selon l'invention, un véhicule automobile comprend un système de moteur thermique défini précédemment ou un dispositif défini précédemment.

Selon l'invention, un produit programme d'ordinateur selon la revendication 9 est téléchargeable depuis un réseau de communication et/ou enregistré sur un support de données lisible par un calculateur et/ou exécutable par un calculateur. Il comprend des instructions de code de programme informatique de mise en oeuvre du procédé défini précédemment, lorsque le programme est exécuté par un calculateur.

Selon l'invention, un support d'enregistrement de données selon la revendication 10, lisible par un calculateur, sur lequel est enregistré un programme d'ordinateur comprend des instructions de code de programme de mise en oeuvre du procédé défini précédemment.

Ces objets, caractéristiques et avantages de la présente invention seront exposés en détail dans la description suivante d'un mode de réalisation d'un dispositif de démarrage d'un moteur thermique selon l'invention et d'un mode d'exécution d'un procédé de fonctionnement d'un dispositif de démarrage d'un moteur thermique selon l'invention fait à titre non limitatif en relation avec les figures jointes parmi lesquelles:
- La figure 1 représente un véhicule automobile équipé d'un dispositif de démarrage d'un moteur thermique.
- La figure 2 représente un ordinogramme d'un mode d'exécution d'un procédé de fonctionnement d'un dispositif de démarrage d'un moteur thermique.

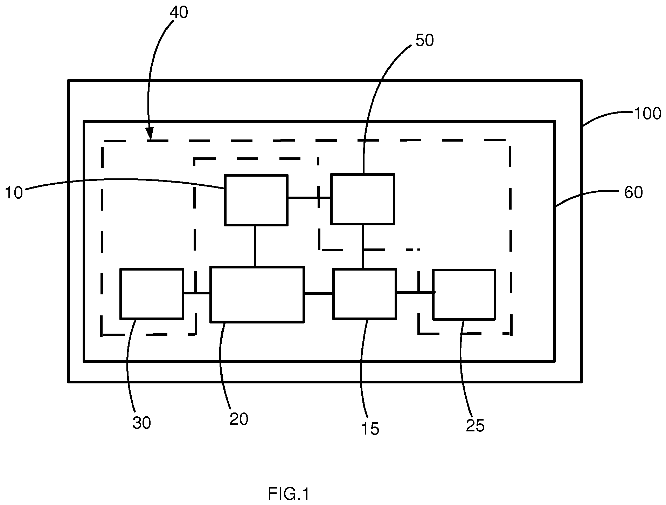

Un exemple d'un véhicule automobile 100 équipé d'un mode de réalisation d'un dispositif 40 de démarrage est décrit ci-après en référence à la figure 1.

Le véhicule automobile 100 comprend un système de moteur thermique 60. Le système de moteur thermique comprend un alterno-démarreur 10, un démarreur 15, un dispositif 40 de démarrage et un moteur thermique 20.

Le dispositif 40 de démarrage comprend des éléments matériels 25, 30, 50 et/ou logiciels mettant en oeuvre ou régissant un procédé de fonctionnement du dispositif 40 de démarrage du moteur thermique 20. En particulier, le dispositif 40 comprend les éléments matériels et/ou logiciels permettant de mettre en oeuvre les étapes du procédé de fonctionnement du dispositif 40 de démarrage du moteur thermique 20. Ces différents éléments peuvent comprendre des modules logiciels.

Par exemple, les éléments matériels et/ou logiciels peuvent comprendre tout ou partie des éléments suivants :
- un détecteur d'immersion du démarreur 25 ;
- un capteur de température 30 ;
- un calculateur 50.

Le détecteur d'immersion du démarreur 25 est en mesure de détecter si le démarreur 15 est immergé ou si une fuite s'est produite dans le système d'étanchéité du démarreur. Par exemple, le détecteur peut comprendre un capteur de présence d'eau dans un carter du démarreur.

Le capteur de température 30 est à même de déterminer une température du moteur thermique 20. Par exemple, le capteur peut comprendre un capteur de température de l'huile de lubrification du moteur ou un capteur de température du liquide de refroidissement du moteur.

Le calculateur 50 est en mesure de recevoir et de traiter les signaux du détecteur de démarreur immergé 25 et de la mesure de la température du moteur thermique 20. Le calculateur 50 est agencé de sorte à transmettre des signaux d'activation de l'alterno-démarreur 10 et du démarreur 15. Notamment, le calculateur peut comprendre des sorties de commande d'interrupteurs commandés d'alimentation du démarreur et de l'alterno-démarreur. Le calculateur peut être un calculateur dédié du dispositif de démarrage. Alternativement, le calculateur peut également gérer d'autres fonctions du système moteur.

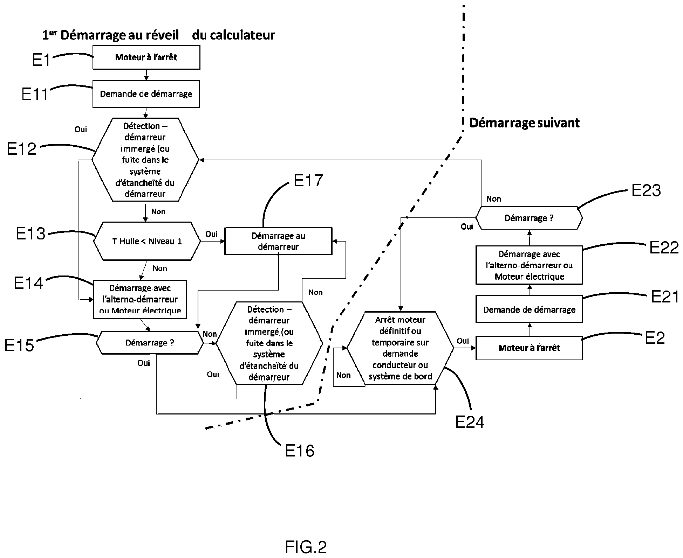

Un mode d'exécution du procédé de fonctionnement d'un dispositif 40 de démarrage d'un moteur thermique 20 est décrit ci-après en référence à la figure 2.

Le procédé comprend une étape d'activation du démarreur et une étape d'activation de l'alterno-démarreur. Les deux étapes sont avantageusement exclusives l'une de l'autre. Les étapes d'activation sont avantageusement des étapes d'activation du démarreur ou de l'alterno-démarreur effectuées pour démarrer le moteur. L'étape d'activation de l'alterno-démarreur 10 comprend une émission d'un signal d'activation, notamment d'un signal d'alimentation, de l'alterno-démarreur 10. L'étape d'activation du démarreur comprend une émission d'un signal d'activation, notamment un signal d'alimentation, du démarreur 15. Les signaux sont par exemple émis par le calculateur. Ces signaux sont par exemple des signaux de commande d'interrupteurs commandés d'alimentation du démarreur et de l'alterno-démarreur. L'étape d'activation de l'alterno-démarreur provoque donc une alimentation électrique ou une activation de l'alterno-démarreur. L'étape d'activation du démarreur provoque donc une alimentation électrique ou une activation du démarreur.

Ce mode d'exécution est décrit dans le cas où le procédé se trouve dans un premier mode de fonctionnement et ensuite dans le cas où le procédé se trouve dans un deuxième mode de fonctionnement. Le premier mode de fonctionnement est mis en oeuvre entre la mise sous tension du dispositif 40 notamment du calculateur 50, et le premier démarrage du moteur faisant suite à cette mise sous tension. Le deuxième mode de fonctionnement est mis en oeuvre le reste du temps, c'est-à-dire après le premier démarrage du moteur faisant suite à la mise sous tension et jusqu'à la déconnexion du dispositif 40 ou du calculateur 50. Autrement dit, le dispositif de démarrage fonctionne selon le premier mode entre chaque nouvelle mise sous tension du dispositif de démarrage ou du calculateur 50 et chaque premier démarrage du moteur. Le reste du temps, en particulier du premier démarrage à la déconnexion du dispositif de démarrage ou du calculateur 50, le dispositif de démarrage fonctionne selon le deuxième mode.

Considérons que le procédé se trouve dans le premier mode de fonctionnement.

Avant de démarrer le moteur thermique du véhicule automobile, un conducteur enclenche le contact au moyen de la clé du véhicule automobile ou à l'aide de tout autre moyen tel qu'un bouton Start/Stop par exemple. C'est à l'issue de cette étape d'enclenchement du contact que le procédé est mis en oeuvre. Une demande de démarrage du moteur peut être réalisée concomitamment à l'enclenchement du contact.

Suite à une étape de demande de démarrage du moteur thermique E11, une étape de détection de démarreur immergé et/ou de fuite dans un système d'étanchéité du démarreur E12 est mise en oeuvre au moyen du détecteur de démarreur immergé 25. Cette étape de détection est par exemple réalisée à l'aide du détecteur de présence d'eau dans un carter du démarreur. S'il est déterminé que le démarreur 15 est immergé et/ou s'il y a une fuite dans le système d'étanchéité du démarreur, on met en oeuvre l'étape d'activation impliquant un démarrage du moteur avec l'alterno-démarreur E14. Si lors de l'étape de détection de démarreur immergé et/ou de fuite dans un système d'étanchéité du démarreur E12, il n'est pas détecté que le démarreur est immergé et aucune fuite n'est détectée dans le système d'étanchéité du démarreur, on passe à une étape de mesure de la température du moteur E13.

L'étape de mesure de la température du moteur E13 est mise en oeuvre au moyen d'un capteur de température 30. Si la température du moteur thermique 20 est inférieure à un premier seuil Niveau 1, on met en oeuvre l'étape d'activation impliquant un démarrage du moteur avec le démarreur E17. Si la température du moteur thermique 20 est supérieure au premier seuil Niveau 1, on met en oeuvre l'étape d'activation impliquant un démarrage du moteur avec l'alterno-démarreur E14.

À l'issue de l'étape de démarrage avec l'alterno-démarreur E14 ou à l'issue de l'étape de démarrage avec le démarreur E17, on passe à une étape de contrôle du démarrage E15.

Lors de l'étape de contrôle du démarrage E15, on vérifie que le moteur thermique 20 a démarré. Si le moteur thermique a démarré, on passe à une étape d'attente d'arrêt moteur E24 du deuxième mode de fonctionnement du procédé et on sort du premier mode de fonctionnement et on entre dans le deuxième mode de fonctionnement. Durant l'étape d'attente d'arrêt moteur E24, on attend un arrêt définitif ou temporaire du moteur sur demande du conducteur ou d'un système de bord du véhicule automobile. Si, lors de l'étape du contrôle du démarrage E15, on détecte que le moteur n'a pas démarré, on passe à une étape de détection de démarreur immergé et/ou de fuite dans un système d'étanchéité du démarreur E16.

Si, lors de l'étape E16, on ne détecte pas que le démarreur est immergé, ni qu'il y a une fuite dans le système d'étanchéité, on met en oeuvre l'étape E17 d'activation impliquant le démarrage du moteur avec le démarreur. Si, lors de l'étape E16, on détecte que le démarreur est immergé et/ou qu'il y a une fuite dans le système d'étanchéité du démarreur, on met en oeuvre l'étape d'activation, impliquant le démarrage avec l'alterno-démarreur E14.

Considérons à présent que, lors de l'étape d'attente d'arrêt du moteur E24, le conducteur ou le système de bord arrête le moteur. Dans ce cas, on se trouve dans le deuxième mode de fonctionnement, plus précisément dans une étape E2 du procédé, le moteur thermique 20 étant à l'arrêt.

Suite à une étape de demande de démarrage du moteur thermique E21, on met en oeuvre l'étape d'activation impliquant un démarrage du moteur avec l'alterno-démarreur E22.

À l'issue de l'étape de démarrage avec l'alterno-démarreur E22, on passe à une étape de contrôle du démarrage E23. Lors de cette étape E23, on vérifie que le moteur thermique 20 a démarré. Si le moteur thermique a démarré, on passe à l'étape d'attente d'arrêt moteur E24 du deuxième mode de fonctionnement du procédé. Si le moteur thermique n'a pas démarré, on passe à l'étape de détection de démarreur immergé et/ou de fuite dans un système d'étanchéité du démarreur E12 du premier mode de fonctionnement du procédé et le premier mode de fonctionnement est mis en oeuvre comme décrit précédemment.

L'invention concerne aussi un produit programme d'ordinateur téléchargeable depuis un réseau de communication et/ou enregistré sur un support de données lisible par le calculateur 50 et/ou exécutable par le calculateur 50. Il comprend des instructions de code de programme informatique de mise en oeuvre du procédé tel que décrit ci-dessus lorsque le programme est exécuté par le calculateur 50.

L'invention concerne aussi un support d'enregistrement de données, lisible par le calculateur 50, sur lequel est enregistré un programme d'ordinateur qui comprend des instructions de code du programme de mise en oeuvre du procédé tel que décrit ci-dessus.

Selon le procédé décrit précédemment, il existe quatre situations de démarrage du moteur thermique 20, dans le premier mode de fonctionnement.
1) Le moteur thermique est démarré au moyen de l'alterno-démarreur s'il est déterminé que :
   - une première tentative de démarrage a été infructueuse, et
   - le démarreur est immergé et/ou il y a une fuite dans le système d'étanchéité du démarreur.
2) Le moteur thermique est démarré au moyen de l'alterno-démarreur s'il est déterminé que :
   - il s'agit d'une première tentative de démarrage, et
   - le démarreur n'est pas immergé, et
   - la température du moteur est supérieure à un premier seuil Niveau 1.
3) Le moteur thermique est démarré au moyen du démarreur s'il est déterminé que :
   - une première tentative de démarrage a été infructueuse, et
   - le démarreur n'est pas immergé.
4) Le moteur thermique est démarré au moyen du démarreur s'il est déterminé que :
   - il s'agit d'une première tentative de démarrage, et
   - le démarreur n'est pas immergé, et
   - la température du moteur est inférieure à un premier seuil Niveau 1.

Selon le procédé décrit précédemment, il existe deux modes de démarrage du moteur thermique 20 selon la situation, dans le deuxième mode de fonctionnement.
1) Le moteur thermique est démarré par défaut à l'aide de l'alterno-démarreur.
2) Si la tentative de démarrage du moteur thermique à l'aide de l'alterno-démarreur est infructueuse, la prochaine tentative de démarrage du moteur thermique se fait avec le dispositif dans le premier mode de fonctionnement jusqu'au prochain démarrage du moteur thermique.

Avantageusement, le procédé de démarrage permet d'éviter le risque d'immobilisation du véhicule si le conducteur tente un redémarrage du véhicule lorsque le moteur a été arrêté alors que le véhicule s'est immobilisé au milieu d'un gué. De plus, on évite les tentatives infructueuses de démarrage à l'aide de l'alterno-démarreur en cas de basses températures.

Avantageusement encore, le procédé de démarrage permet de réduire le nombre d'occurrence d'usage du démarreur et permet aussi de ne pas sur dimensionner le démarreur pour les usages de Stop/Start et d'arrêt du véhicule avec le moteur débrayé.

## Revendications

1. Procédé de fonctionnement d'un dispositif (40) de démarrage d'un moteur thermique (20) comprenant un alterno-démarreur (10), un démarreur (15) et un calculateur (50), **caractérisé en ce que** le procédé comprend une première et une deuxième étapes d'activation exclusives l'une de l'autre :
- la première étape d'activation comprenant une émission d'un signal d'activation, notamment un signal d'alimentation, de l'alterno-démarreur (10), et
- la deuxième étape d'activation comprenant une émission d'un signal d'activation, notamment un signal d'alimentation, du démarreur (15)
et **en ce que** le procédé comprend un premier mode de fonctionnement mis en oeuvre entre une mise sous tension du dispositif (40) de démarrage, notamment du calculateur (50) et le premier démarrage du moteur faisant suite à cette mise sous tension et un deuxième mode de fonctionnement le reste du temps, c'est-à-dire après le premier démarrage du moteur faisant suite à la mise sous tension et jusqu'à la déconnexion du dispositif (40) ou du calculateur (50),
**caractérisé en ce que** le premier mode de fonctionnement comprend pour le premier démarrage du moteur thermique (20) :
- une étape de demande de démarrage du moteur thermique (E11), puis une étape de détection de démarreur immergé et/ou de fuite dans un système d'étanchéité du démarreur (E12) mise en oeuvre au moyen d'un détecteur de démarreur immergé (25), la mise en oeuvre d'une étape d'activation impliquant un démarrage du moteur avec l'alterno-démarreur, s'il est déterminé que le démarreur (15) est immergé et/ou s'il y a une fuite dans le système d'étanchéité du démarreur (20) ;
- une étape de mesure de la température du moteur (E13) mise en oeuvre au moyen d'un capteur de température (30), dans le cas où il n'a pas été détecté que le démarreur est immergé et qu'aucune fuite n'a été détectée dans le système d'étanchéité du démarreur, l'étape d'activation impliquant un démarrage du moteur avec l'alterno-démarreur (E14) étant mise en oeuvre si la température du moteur thermique (20) est supérieure à un premier seuil (Niveau 1), et l'étape d'activation impliquant le démarrage du moteur avec le démarreur étant mise en oeuvre si la température du moteur thermique (20) est inférieure à un premier seuil (Niveau 1).

2. Procédé de fonctionnement selon la revendication précédente **caractérisé en ce que** le premier mode de fonctionnement comprend, suite à une étape de demande de démarrage du moteur thermique (E11), le démarrage du moteur thermique au moyen de l'alterno-démarreur s'il est déterminé que :
- une première tentative de démarrage a été infructueuse ; et
- le démarreur est immergé ou il existe une fuite dans le système d'étanchéité du démarreur.

3. Procédé de fonctionnement selon l'une quelconque des revendications précédentes, **caractérisé en ce que** le premier mode de fonctionnement comprend, suite à une étape de demande de démarrage du moteur thermique (E11), le démarrage du moteur thermique au moyen du démarreur s'il est déterminé que :
- Une première tentative de démarrage a été infructueuse ; et
- le démarreur n'est pas immergé.

4. Procédé de fonctionnement selon l'une quelconque des revendications précédentes, **caractérisé en ce que** le deuxième mode de fonctionnement comprend, suite à une étape de demande de démarrage du moteur thermique (E21), la première étape d'activation.

5. Procédé de fonctionnement selon la revendication précédente, **caractérisé en ce que** le deuxième mode de fonctionnement comprend, suite à une tentative infructueuse de démarrage du moteur et jusqu'au prochain démarrage du moteur, une mise en oeuvre du premier mode de fonctionnement.

6. Dispositif (40) de démarrage d'un moteur thermique (20), comprenant des éléments matériels (25, 30, 50) et/ou logiciels mettant en oeuvre le procédé selon l'une des revendications précédentes, notamment des éléments matériels et/ou logiciel conçus pour mettre en oeuvre le procédé selon l'une des revendications précédentes, les moyens matériels comprenant :
- un détecteur de démarreur immergé (25),
- un capteur de température (30), et
- un calculateur (50).

7. Système de moteur thermique (60) comprenant un alterno-démarreur (10), un démarreur (15), un dispositif (40) selon la revendication 6 et un moteur thermique (20).

8. Véhicule automobile (100) comprenant un système de moteur thermique (60) selon la revendication précédente ou un dispositif (40) selon la revendication 6.

9. Produit programme d'ordinateur **caractérisé en ce qu'**il comprend des instructions de code de programme informatique de mise en oeuvre du procédé selon l'une quelconque des revendications 1 à 5, dans le système de moteur thermique selon la revendication 7 ou dans le véhicule automobile selon la revendication 8, lorsque le programme est exécuté par le calculateur (50) du dispositif (40) de démarrage d'un moteur thermique selon la revendication 6.

10. Support d'enregistrement de données, lisible par un calculateur (50), sur lequel est enregistré le produit programme d'ordinateur selon la revendication 9.

## Patentansprüche

1. Verfahren für den Betrieb einer Anlassvorrichtung (40) eines Verbrennungsmotors (20), die einen Startergenerator (10), einen Anlasser (15) und einen Rechner (50) beinhaltet, **dadurch gekennzeichnet, dass** das Verfahren einen ersten und einen zweiten Aktivierungsschritt beinhaltet, die sich gegenseitig ausschließen:
- wobei der erste Aktivierungsschritt das Senden eines Aktivierungssignals, insbesondere eines Versorgungssignals, für den Startergenerator (10) beinhaltet und
- wobei der zweite Aktivierungsschritt das Senden eines Aktivierungssignals, insbesondere eines Versorgungssignals, für den Anlasser (15) beinhaltet,
und dass das Verfahren einen ersten Betriebsmodus, der zwischen einem Einschalten der Anlassvorrichtung (40), insbesondere des Rechners (50), und dem ersten Anlassen des Motors im Anschluss an dieses Einschalten umgesetzt wird, und einen zweiten Betriebsmodus für die restliche Zeit, das heißt nach dem ersten Anlassen des Motors im Anschluss an das Einschalten und bis zum Ausschalten der Vorrichtung (40) oder des Rechners (50), beinhaltet,
**dadurch gekennzeichnet, dass** der erste Betriebsmodus für das erste Anlassen des Verbrennungsmotors (20) Folgendes beinhaltet:
- einen Schritt des Anforderns des Anlassens des Verbrennungsmotors (E11), dann einen Schritt des Detektierens eines eingetauchten Anlassers und/oder eines Lecks in einem Dichtheitssystem des Anlassers (E12), der mit Hilfe eines Detektors für einen eingetauchten Anlasser (25) umgesetzt wird, wobei das Umsetzen eines Aktivierungsschritts ein Anlassen des Motors mit dem Startergenerator impliziert, wenn bestimmt wird, dass der Anlasser (15) eingetaucht ist, und/oder wenn ein Leck in dem Dichtheitssystem des Anlassers (20) vorhanden ist;
- einen Schritt des Messens der Temperatur des Motors (E13), der mit Hilfe eines Temperatursensors (30) umgesetzt wird, in dem Fall, in dem nicht detektiert wurde, dass der Anlasser eingetaucht ist, und kein Leck in dem Dichtheitssystem des Anlassers detektiert wurde, wobei der Aktivierungsschritt, der ein Anlassen des Motors mit dem Startergenerator impliziert (E14), umgesetzt wird, wenn die Temperatur des Verbrennungsmotors (20) größer als ein erster Schwellenwert (Niveau 1) ist, und der Aktivierungsschritt, der das Anlassen des Motors mit dem Anlasser impliziert, umgesetzt wird, wenn die Temperatur des Verbrennungsmotors (20) kleiner als ein erster Schwellenwert (Niveau 1) ist.

2. Betriebsverfahren nach dem vorhergehenden Anspruch, **dadurch gekennzeichnet, dass** der erste Betriebsmodus im Anschluss an einen Schritt des Anforderns des Anlassens des Verbrennungsmotors (E11) das Anlassen des Verbrennungsmotors mit Hilfe des Startergenerators beinhaltet, wenn bestimmt wird, dass:
- ein erster Anlassversuch erfolglos war; und
- der Anlasser eingetaucht ist oder ein Leck in dem Dichtheitssystem des Anlassers vorhanden ist.

3. Betriebsverfahren nach einem beliebigen der vorhergehenden Ansprüche, **dadurch gekennzeichnet, dass** der erste Betriebsmodus im Anschluss an einen Schritt des Anforderns des Anlassens des Verbrennungsmotors (E11) das Anlassen des Verbrennungsmotors mit Hilfe des Anlassers beinhaltet, wenn bestimmt wird, dass:
- ein erster Anlassversuch erfolglos war; und
- der Anlasser nicht eingetaucht ist.

4. Betriebsverfahren nach einem beliebigen der vorhergehenden Ansprüche, **dadurch gekennzeichnet, dass** der zweite Betriebsmodus im Anschluss an einen Schritt des Anforderns des Anlassens des Verbrennungsmotors (E21) den ersten Aktivierungsschritt beinhaltet.

5. Betriebsverfahren nach dem vorhergehenden Anspruch, **dadurch gekennzeichnet, dass** der zweite Betriebsmodus im Anschluss an einen erfolglosen Anlassversuch des Motors und bis zum nächsten Anlassen des Motors eine Umsetzung des ersten Betriebsmodus beinhaltet.

6. Vorrichtung (40) zum Anlassen eines Verbrennungsmotors (20), die Hardware (25, 30, 50) und/oder Software zur Umsetzung des Verfahrens nach einem der vorhergehenden Ansprüche beinhaltet, insbesondere Hardware und/oder Software, die dazu ausgelegt sind, das Verfahren nach einem der vorhergehenden Ansprüche umzusetzen, wobei die Hardware Folgendes beinhaltet:
- einen Detektor für einen eingetauchten Anlasser (25),
- einen Temperatursensor (30) und
- einen Rechner (50).

7. Verbrennungsmotorsystem (60), das einen Startergenerator (10), einen Anlasser (15), eine Vorrichtung (40) nach Anspruch 6 und einen Verbrennungsmotor (20) beinhaltet.

8. Kraftfahrzeug (100), das ein Verbrennungsmotorsystem (60) nach dem vorhergehenden Anspruch oder eine Vorrichtung (40) nach Anspruch 6 beinhaltet.

9. Computerprogrammprodukt, **dadurch gekennzeichnet, dass** es Computerprogrammcodeanweisungen zur Umsetzung des Verfahrens nach einem beliebigen der Ansprüche 1 bis 5 in dem Verbrennungsmotorsystem nach Anspruch 7 oder in dem Kraftfahrzeug nach Anspruch 8 beinhaltet, wenn das Programm durch den Rechner (50) der Vorrichtung (40) zum Anlassen eines Verbrennungsmotors nach Anspruch 6 ausgeführt wird.

10. Datenaufzeichnungsmedium, das von einem Rechner (50) gelesen werden kann und auf dem das Computerprogrammprodukt nach Anspruch 9 aufgezeichnet ist.

## Claims

1. Method for operating a device (40) for starting a combustion engine (20) comprising an alternator-starter (10), a starter (15) and a computer (50), **characterized in that** the method comprises a first activation step and a second activation step that are mutually exclusives:
- the first activation step comprising emission of an activation signal, in particular a power supply signal, for the alternator-starter (10), and
- the second activation step comprising emission of an activation signal, in particular a power supply signal, for the starter (15)
and **in that** the method comprises a first operating mode implemented between powering up the starting device (40), in particular the computer (50), and the first starting of the engine following this switching on and a second operating mode the rest of the time, i.e. after the first starting of the engine following the switching on and until the disconnection of the device (40) or the computer (50),
**characterized in that** the first operating mode comprises, for the first starting of the combustion engine (20):
- a step of requesting starting of the combustion engine (E11), then a step of detecting submerged starter and/or leak in a sealing system of the starter (E12) that is implemented by means of a submerged starter detector (25), the implementation of an activation step involving starting the engine with the alternator-starter, if it is determined that the starter (15) is submerged and/or if there is a leak in the sealing system of the starter (20) ;
- a step of measuring the temperature of the engine (E13) that is implemented by means of a temperature sensor (30), in the case in which it has not been detected that the starter is submerged and no leak has been detected in the sealing system of the starter, the activation step involving starting the engine with the alternator-starter (E14) being implemented if the temperature of the combustion engine (20) is above a first threshold (Level 1), and the activation step involving the starting of the engine with the starter being implemented if the temperature of the combustion engine (20) is below a first threshold (Level 1).

2. Operating method according to the preceding claim, **characterized in that** the first operating mode comprises, following a step of requesting starting of the combustion engine (E11), the starting of the combustion engine by means of the alternator-starter if it is determined that:
- a first starting attempt has been unsuccessful; and
- the starter is submerged or there is a leak in the sealing system of the starter.

3. Operating method according to either one of the preceding claims, **characterized in that** the first operating mode comprises, following a step of requesting starting of the combustion engine (E11), the starting of the combustion engine by means of the starter if it is determined that:
- a first starting attempt has been unsuccessful; and
- the starter is not submerged.

4. Operating method according to any one of the preceding claims, **characterized in that** the second operating mode comprises, following a step of requesting starting of the combustion engine (E21), the first activation step.

5. Operating mode according to the preceding claim, **characterized in that** the second operating mode comprises, following an unsuccessful attempt to start the engine and until the next starting of the engine, implementation of the first operating mode.

6. Device (40) for starting a combustion engine (20), comprising hardware elements (25, 30, 50) and/or software elements implementing the method according to one of the preceding claims, in particular hardware elements and/or software elements designed to implement the method according to one of the preceding claims, the hardware means comprising:
- a submerged starter detector (25),
- a temperature sensor (30), and
- a computer (50).

7. Combustion engine system (60) comprising an alternator-starter (10), a starter (15), a device (40) according to Claim 6 and a combustion engine (20).

8. Motor vehicle (100) comprising a combustion engine system (60) according to the preceding claim or a device (40) according to Claim 6.

9. Computer program product, **characterized in that** it comprises computer program code instructions for implementing the method according to any one of Claims 1 to 5, in the combustion engine system according to Claim 7 or in the motor vehicle according to Claim 8, when the program is executed by the computer (50) of the device (40) for starting a combustion engine according to Claim 6.

10. Data storage medium, readable by a computer (50), on which is stored the computer program product according to Claim 9.
